# EUROPÄISCHE PATENTSCHRIFT

(11) **EP 1 964 444 B1**
(45) Veröffentlichungstag und Bekanntmachung des Hinweises auf die Patenterteilung: **25.01.2017**
(21) Anmeldenummer: 06806449.2
(22) Anmeldetag: 21.10.2006
(51) Int. Cl.: H05B 3/00, B29C 49/64

(54) **VORRICHTUNG ZUM TEMPERIEREN VON VORFORMLINGEN**
DEVICE FOR TEMPERING PREFORMS
DISPOSITIF PERMETTANT DE PORTER DES PARAISONS À UNE CERTAINE TEMPÉRATURE

(30) Priorität: 23.12.2005 DE 202005020252 U
(43) Veröffentlichungstag der Anmeldung: 03.09.2008
(73) Patentinhaber: Krones AG, 93073 Neutraubling (DE)
(72) Erfinder: FINGER, Dieter, 93073 Neutraubling (DE); VOTH, Klaus, 93073 Neutraubling (DE)
(74) Vertreter: Grünecker Patent- und Rechtsanwälte PartG mbB
(86) Internationale Anmeldenummer: PCT/EP2006/010167
(87) Internationale Veröffentlichungsnummer: WO 2007/079798

(56) Entgegenhaltungen:
- WO-A-2005/036928
- GB-A- 1 089 471
- US-A- 5 968 397
- US-A1- 2004 149 712

## Beschreibung

Die Erfindung betrifft eine Vorrichtung nach dem Oberbegriff des Anspruchs 1.

Solche Vorrichtungen zum Temperieren von Vorformlingen werden hauptsächlich für Kunststoffvorformlinge verwendet, wobei die Kunststoffvorformlinge für die weitere Verarbeitung - wie z.B. einer Verformung - erwärmt werden. Ein solches Anwendungsgebiet zum Erwärmen von Vorformlingen ist z. B. die Lebensmittelindustrie, insbesondere die Getränkeindustrie, in der Kunststoffvorformlinge erwärmt und durch einen Verformvorgang zu Behältern ausgeformt werden. Solche Behälter sind z.B. Flaschen für Getränke oder andere flüssige Lebensmittel.

Die Vorformlinge werden vor ihrer Verformung durch einen Ofen transportiert und auf eine Verformungstemperatur erwärmt. Der Ofen ist dabei mit einer Vielzahl von Heizkästen ausgerüstet, an denen die Vorformlinge vorbeigeführt werden. Diese Heizkästen weisen eine Vielzahl von Strahlern auf, die die nötige Energie zur Erwärmung abgeben.

Im Stand der Technik sind verschiedene Heizkästen mit Strahlern bekannt.

So zeigt die GB 1089471 A ein elektrisches InfrarotHeizstrahler Element zum Trocknen von gewaschenen Fahrzeugen.

Ferner zeigt die WO 2005/036928 A1 einen Heizstrahler zum erhitzen oder erwärmen von Oberflächen und/oder Räumen.

Weiterhin zeigt die DE 297 21 183 U1 einen Heizkasten mit mehreren Strahlern mit elektrischen Anschlüssen, die mit einer Anschlussleiste zur Energieversorgung verbunden sind. Der Austausch von defekten Strahlern erfolgt durch das Lösen der elektrischen Anschlüsse
von der Klemmleiste, durch das Herausziehen der Strahler mit den Isolatoren aus der Strahlerhalterung, durch das Einsetzen eines neuen Strahlers mit Isolatoren und elektrischen Anschlüssen in die Strahlerhalterung und das Herstellen einer elektrischen Wirkverbindung der elektrischen Anschlüsse des neuen Strahlers.

Der Nachteil dieses Heizkastens besteht darin, dass ein Austausch eines Strahlers nur unter großem Arbeitsaufwand möglich ist, da der Heizkasten so auseinandergebaut werden muss, dass die elektrischen Anschlussleisten zugänglich sind. Es ist deshalb Aufgabe der vorliegenden Erfindung, eine Vorrichtung zum Temperieren von Vorformlingen aus PET zu schaffen, bei der ein einfaches Auswechseln von defekten Strahlern möglich ist ohne den Wirkungsgrad der Anlage stark zu beeinträchtigen.

Die Aufgabe bezüglich der Vorrichtung wird gelöst durch die Merkmale des Anspruchs 1.

Bei dem zu temperierenden Vorformlingen handelt es sich vorzugsweise um Preforms zur Herstellung von Behältern wie z.B. Flaschen. Jedoch sind auch viele andere (Kunststoff-) Vorformlinge mit dieser Vorrichtung erwärmbar.

Nach einer besonders bevorzugten Weiterbildung der Erfindung handelt es sich bei dem Strahler um einen Infrarotstrahler, der vorzugsweise Wellenlängen im nahen Infrarotbereich abstrahlt. Grundsätzlich ist aber festzuhalten, dass die Wellenlänge der vom Strahler abgegebenen Strahlung vom zu temperierenden Material abhängt, weshalb es auch möglich ist, einen Strahler einzusetzen, der beispielsweise Strahlung im Ultraviolettbereich oder nur im sichtbaren Bereich abstrahlt.

Gemäß einer bevorzugten Weiterbildung der Erfindung besteht der Strahler zumindest aus einem Quarzglasrohr, in dem eine Glühwendel eingebracht ist. Die Enden des Quarzglasrohres sind vorzugsweise abgeflacht.

Vorzugsweise sind die Enden der Strahler mit einer Metallhülle versehen, um eine elektrische Leitfähigkeit zu erzeugen, die es ermöglicht, dass Strom von der Glühwendel aufgenommen werden kann. Unter einer solchen Metallhülle kann z.B. eine metallische Beschichtung des Quarzglasrohres oder ein Metallstück, das den Enden des Strahlers angepasst ist, verstanden werden. Es sind auch andere Metallhüllen denkbar. Wichtig ist hier vor allem die Funktion, dass eine leitende Wirkverbindung hergestellt wird, sodass die Glühwendel stromdurchflossen ist und glüht.

Der mit der Metallhülle versehene Bereich des Strahlers ist vorzugsweise in einen Isolator eingebracht, so dass Kurzschlüsse zwischen zwei nebeneinander angebrachten Strahlern sowie die Verletzungsgefahr von Bedienpersonal durch Stromschlag vermieden wird. Die Isolatoren sind fest mit einem elektrischen Anschluss wie zum Beispiel einem im Normalbetrieb stromführenden Kabel und über dieses mit der Stromversorgung verbunden. Der Isolator weist an der Berührungsfläche zum Strahler eine Fläche auf, mit der Strom an die Metallhülle und somit an den Strahler übertragen werden kann.

Unter Isolator ist erfindungsgemäß ein bereichsweise leitender Isolator zu verstehen, der nach außen hin isoliert, sodass sich Bedienpersonal nicht verletzen kann, jedoch innen eine Struktur aufweist, die Strom von den elektrischen Anschlüssen über den Isolator zum Strahler leiten kann.

Die leitfähigen Verbindungen sind durch Stecken mit den Isolatoren verbindbar. Es ist jedoch auch denkbar, dass die leitfähigen Verbindungen in einen Stecker münden, der wiederum mit den Isolatoren in Wirkverbindung gebracht werden kann.

Ein solcher Stecker kann z.B. ein handelsüblicher Flachstecker oder ein genormter R7S-Stecker sein. Es sind aber auch jegliche andere Standard- oder Sondersteckverbindungen denkbar.

Eine Vorrichtung zum Erwärmen von Vorformlingen kann dabei verschieden viele Strahler aufweisen. Somit ist es möglich, dass die Vorrichtung nur zwei Strahler aufweist. Vorzugsweise sind jedoch zwischen 3 und 12 Strahler, am bevorzugtesten 9 Strahler in der Temperiervorrichtung vorhanden.

Die Vorrichtung ist vorzugsweise so ausgebildet, dass die Strahler in ihrer Höhe und bezüglich des Abstandes zum zu erwärmenden Gegenstand verstellt werden können, wobei eine Verstellung vorzugsweise stufenlos erfolgt. Unter einer stufenlosen Verstellung ist auch eine nahezu stufenlose Verstellung mittels feinen Rastabschnitten vorstellbar.

Die Verbindung zwischen Energiezuführung (sprich elektrischem Anschluss und Isolator) und Strahlern wird durch eine Steckverbindung hergestellt. Dies hat den Vorteil, dass ein besonders schnelles und einfaches Lösen des Strahlers von der Energiezuführung möglich ist.

Vorzugsweise besteht der Isolator aus einem quaderförmigen Keramiksockel, dessen Innenabmessung im Wesentlichen der Geometrie des Endes des Strahlers entspricht. Der Isolator kann allerdings auch jegliche beliebige andere Form haben, mit der eine Befestigung im Heizkasten möglich ist.

Eine besonders bevorzugte Weiterbildung der Erfindung besteht darin, dass die elektrischen Anschlüsse der Isolatoren ohne Umwege direkt mit der stromzuführenden Leitung verbunden sind. Zwar besteht auch die Möglichkeit, dass die elektrischen Anschlüsse über eine Anschlussleiste mit der stromzuführenden Leitung verbunden sind, jedoch erhöhen sich durch eine solche Konstruktion die Fehleranfälligkeit und die Kosten des Systems.

Der Strahler besteht vorzugsweise aus einem länglichen Quarzgehäuse in dem eine Glühwendel angebracht ist. Die an den Enden des Strahlers angebrachten leitfähigen Verbindungen können mit mit elektrischen Anschlüssen versehenen Isolatoren in Verbindung gebracht werden.

Gemäß einer besonders bevorzugten Weiterbildung der Erfindung handelt es sich bei dem Strahler um einen Infrarotstrahler. Die Glühwendel ist vorzugsweise so ausgebildet, dass Leistungen im Bereich zwischen 1500 und 5000 Watt aufgenommen werden können, wobei die bevorzugte Leistungsaufnahme bei 3000 Watt liegt.

Die Erfindung wird anhand der Figuren näher erläutert. Dabei zeigen:
- Fig. 1: eine dreidimensionale Darstellung eines Heizkastens mit mehreren Strahlern,
- Fig. 2: eine Detailansicht eines Heizkastens gemäß Fig. 1,
- Fig. 3a: einen herkömmlichen Infrarotstrahler,
- Fig. 3b: einen Infrarotstrahler mit standardisiertem Stecker,
- Fig. 3c: einen Strahler mit einem weiteren standardisierten Stecker,
- Fig. 3d: einen Strahler mit einem stirnseitigem Flachkontakt.

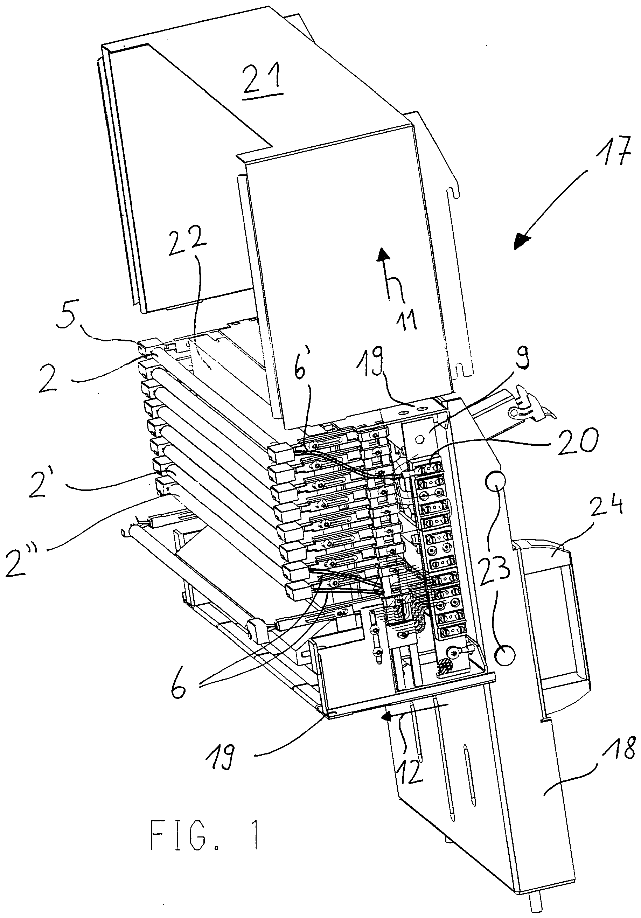

Fig. 1 zeigt einen Heizkasten 17 mit einer Grundplatte 18 und einer Heizkastenabdeckung 21. An der Grundplatte 18 und an zwei im Wesentlichen senkrecht zu dieser angebrachten Stützplatten 19 sind die Reflektorkacheln 22, die Strahler 2 sowie die elektrischen Kontakte angebracht. In diesem Heizkasten 17 befinden sich neun Strahler 2, wobei jeder Strahler 2 an seiner linken und rechten Seite von einem Isolator 5 erfasst ist. An der Rückseite der Grundplatte 18 befinden sich zwei Griffe 24, mit Hilfe derer der Heizkasten 17 aus einem Ofen zur Erwärmung der Vorformlinge entnommen werden kann.

Senkrecht zwischen den beiden Stützplatten 19 parallel zur Grundplatte 18 befindet sich eine Anschlussleiste 9, an der gemäß dem Stand der Technik die elektrischen Anschlüsse 6' der Isolatoren 5 befestigt wurden. Aus diesem Grund sind auf der Anschlussleiste 9 mindestens genauso viele Anschlussplätze 20 vorhanden wie Strahler 2 vorhanden sind. Die Anschlussleiste 9 ihrerseits ist mit einer hier nicht gezeigten zentralen Stromversorgung verbunden.

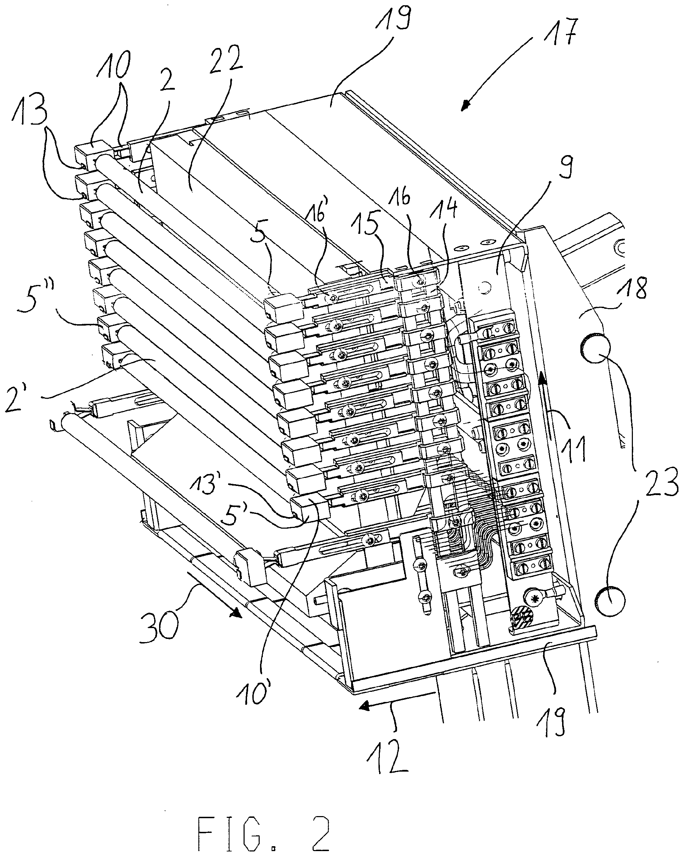

Fig. 2 zeigt einen Teil eines Heizkastens 17 in vergrößerter Darstellung. Zu sehen ist hier ebenfalls die Grundplatte 18, die beiden Stützplatten 19 sowie die Anschlussleiste 9. Auch zu sehen sind die Reflektorkacheln 22 sowie die Strahler 2. Diese weisen links und rechts jeweils einen Isolator 5 auf, der sich jeweils an seiner oberen Seite an einem Lampenhalter 10 abstützt. An der unteren Seite des Isolators 5 befindet sich eine Feder 13 die zusammen mit dem Lampenhalter 10 eine sichere Halterung gewährleistet. Der Lampenhalter 10 und die Feder 13 sind jeweils an einer Tiefenverstellleiste 15 mittels einer Verstellschraube 16' befestigt. Die Tiefenverstellleiste 15 ihrerseits ist an einer Höhenverstellleiste 14 mittels einer Verstellschraube 16 angebracht. Durch das Lösen der Verstellschraube 16 kann die Tiefenverstellleiste 15 entlang der Höhenverstellleiste 14 in Richtung 11 bewegt werden. Durch das Lösen der Verstellschraube 16' kann der Strahler 2 entlang der Tiefenverstellleiste 15 in Richtung 12 bewegt werden. Durch diese Verstellmöglichkeiten ist eine stufenlose Höhen- und Tiefeneinstellung der Strahler 2 möglich.

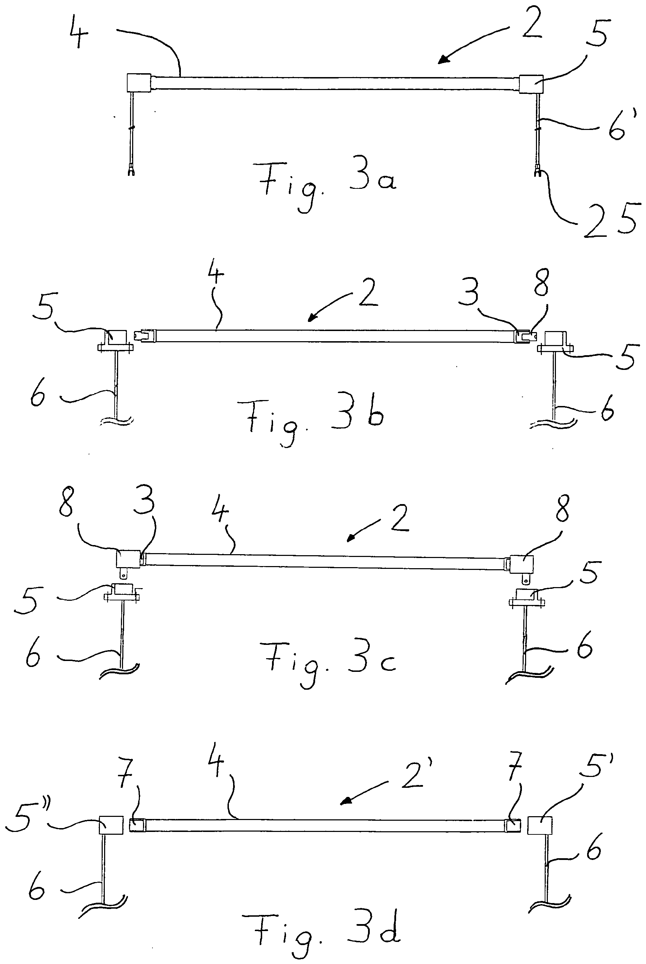

Fig. 3a zeigt einen Strahler 2, wie er nach dem Stand der Technik verwendet wird. Er weist ein Gehäuse 4 auf, in dem eine hier nicht dargestellte Glühwendel untergebracht ist. Die beiden Enden des Strahlers 2 befinden sich in Isolatoren 5, die wiederum mit elektrischen Anschlüssen 6' versehen sind. Am Ende dieser Anschlüsse 6' befindet sich eine Kabelklemme 25. Der Aufbau des Strahlers 2 nach Fig. 3a gestaltet sich so, dass die Kabelklemmen 25, die elektrischen Anschlüsse 6', die Isolatoren 5 sowie der Strahler 2 eine fest verbundene Baueinheit bilden. Ein Strahler 2 gemäß Fig. 3a, der in einen Heizkasten 17 eingebaut ist, wird mittels der Kabelklemme 25 an einen Anschlussplatz 20 der Anschlussleiste 9 angeschlossen.

Wird ein solcher Strahler 2 ausgewechselt, so werden die Befestigungen 23 am Heizkasten 17 gelöst, so dass die Heizkastenabdeckung 21 in Richtung 11 nach oben abgezogen werden kann. Dadurch wird die Anschlussleiste 9 mit den Anschlussplätzen 20 frei zugänglich. Mittels eines Schraubendrehers werden die Befestigungen zwischen der Kabelklemme 25 und dem Anschlussplatz 20 gelöst, die Feder 13 entgegen der Richtung 11 weggespreizt, so dass der Isolator 5 mit dem elektrischen Anschluss 6' in Richtung 12 aus dem Lampenhalter 10 gezogen werden kann. Ein neuer Strahler 2 gemäß Fig. 3a wird in den Heizkasten 17 eingesetzt und der elektrische Anschluss 6' mit seiner Kabelklemme 25 am Anschlussplatz 20 der Anschlussleisten 9 befestigt. Alsdann kann die Heizkostenabdeckung 21 auf den Heizkasten 17 bzw. die Grundplatte 18 aufgeschoben und mit den Befestigungen 23 fixiert werden.

Es ist also ein Nachteil im Stand der Technik darin zu sehen, dass der Austausch der Strahler 2 durch die notwendige Abnahme der Heizkastenabdeckung 21 und des Lösens der elektrischen Anschlüsse 6' von den Anschlussplätzen 20 der Anschlussleiste 9 sehr kompliziert und zeitaufwändig ist. Der neue Heizkasten 17 mit den neuen Strahlern 2,2' gemäß den Fig. 3b bis 3d weist ein erheblich günstigeres Wechselverhalten auf. Der Strahler 2 gemäß Fig. 3b ist so aufgebaut, dass das rohrförmige Gehäuse 4, das auch eine hier nicht gezeigte Glühwendel umfasst, an seinen beiden Enden mit je einer leitfähigen Verbindung 3 und einem Stecker 8 versehen ist. Bei dem Stecker 8 handelt es sich um einen handelsüblichen R7S-Sockel, der in einem dementsprechend geformten Isolator 5 eingeführt werden kann. Die elektrischen Anschlüsse 6 sind mit den Isolatoren 5 fest verbunden.

Der Strahler 2 gemäß Fig. 3b weist im Gegensatz zum Strahler 2 gemäß Fig. 3a der eine einzige Baueinheit umfasst, drei lösbare Baueinheiten auf, wobei eine Baueinheit aus dem Gehäuse 4, den leitfähigen Verbindungen 3 sowie dem Stecker 8, und die anderen beiden Baueinheiten je aus einem Isolator 5 und einem elektrischen Anschluss 6 bestehen.

Fig. 3c weist ebenfalls einen Strahler 2 mit drei Baugruppen gemäß Fig. 3b auf. Der Unterschied zu dem Strahler 2 gemäß Fig. 3b besteht darin, dass die Stecker 8 keine R7S-Stecker sondern handelsübliche Flachstecker sind, und dass die Isolatoren 5 entsprechend des Flachsteckers 8 ausgebildet sind.

Eine besonders bevorzugte Weiterbildung der Erfindung besteht in einer Ausführungsform gemäß Fig. 3d, nach der der Strahler 2' an den beiden Enden abgeflacht ist und die leitfähige Verbindung 3 durch eine Metallhülle 7 ausgeprägt ist. Dieses abgeflachte Ende mit der Metallhülle 7 kann in den dementsprechend geformten Isolator 5 eingesteckt werden.

Der Strahler 2' ist in den Heizkasten 17 an drittletzter Stelle von unten eingebaut. Ein Strahler 2' gemäß Fig. 3d hat den Vorteil, dass ein Ausbau bzw. Wechsel ohne die Abnahme der Heizkastenabdeckung 21 möglich ist. Dies wird dadurch bewerkstelligt, dass der Isolator 5 mit seinem elektrischen Anschluss 6 fest im Heizkasten 17 eingebaut ist und während seiner gesamten Betriebszeit nicht komplett ausgebaut wird. Der elektrische Anschluss 6 ist nicht mit der Anschlussleiste 9, sondern direkt mit der energiezuführenden Leitung des Heizkastens 17 verbunden. Muss ein Strahler 2' gemäß Fig. 3d ausgebaut werden, so geschieht dies dadurch, dass eine Feder 13 entgegen der Richtung 11 weggebogen wird, so dass der Isolator 5' ein wenig in Richtung 12 herausgezogen werden kann. Alsdann kann er in Richtung 30 vom Strahler 2' abgezogen werden, der dann seinerseits in Richtung 30 aus dem Isolator 5" herausgezogen werden kann.

Ein neuer Strahler 2' mit seinen an beiden Enden angebrachten Metallhüllen 7 wird zuerst in den Isolator 5" eingeschoben, der Isolator 5' wird auf das freie Ende des Strahlers 2' aufgeschoben, die Feder 13' wird entgegen der Richtung 11 nach unten bewegt, so dass der Isolator 5' in den Lampenhalter 10' eingeführt werden kann. Der Strahlerwechsel ist daher ohne Entfernung des Heizkastens 17 möglich.

Ein weiterer Unterschied zum Stand der Technik besteht darin, dass die elektrischen Anschlüsse 6 der Strahler 2' und 2'' nicht an die Anschlussplätze 20 der Anschlussleiste 9 angeschlossen werden, sondern dass sie hinter den Reflektorkacheln 22 gebündelt und direkt mit der stromzuführenden Leitung verbunden werden. Die störanfällige Anschlussleiste 9 mit ihren Anschlussplätzen 20 kann daher aus dem Heizkasten 17 entfernt werden. Die Störanfälligkeit der Anschlussleiste 9 ist darin begründet, dass auf Grund des geringen Abstandes der Anschlussplätze 20 Kurzschlüsse bei unsauberer Montage der Kabelklemmen 25 an den Anschlussplätzen 20 entstehen können.

## Patentansprüche

1. Vorrichtung zum Temperieren von Vorformlingen aus PET mit einem mindestens zwei Strahler (2) aufweisenden Heizkasten (17), wobei jeder Strahler (2) zumindest aus einem länglichen Gehäuse (4) und an den Enden angebrachten leitfähigen Verbindungen (3) besteht, wobei die leitfähigen Verbindungen (3) mit mit elektrischen Anschlüssen (6) versehenen Isolatoren (5) wirkverbunden sind, **dadurch gekennzeichnet, dass** der Heizkasten (17) eine Grundplatte (18) und zwei im wesentlichen senkrecht zur Grundplatte angeordnete Stützplatten (19) umfasst, wobei an der Grundplatte und den Stützplatten die Strahler (2) angebracht sind und die leitfähigen Verbindungen (3) und die Isolatoren (5) durch eine Steckverbindung lösbar miteinander wirkverbunden sind.

2. Vorrichtung nach Anspruch 1, **dadurch gekennzeichnet, dass** der Strahler (2) ein Infrarot-Strahler ist.

3. Vorrichtung nach Anspruch 2, **dadurch gekennzeichnet, dass** der Strahler (2) eine Glühwendel in einem Quarzglasrohr aufweist.

4. Vorrichtung nach wenigstens einem der vorhergehenden Ansprüche, **dadurch gekennzeichnet, dass** die beiden Enden des Strahlers (2) abgeflacht sind.

5. Vorrichtung nach Anspruch 4, **dadurch gekennzeichnet, dass** die beiden abgeflachten Enden des Strahlers (2) von Metallhüllen (7) umgeben sind, die in elektrischer Wirkverbindung mit der Glühwendel stehen.

6. Vorrichtung nach wenigstens einem der vorhergehenden Ansprüche, **dadurch gekennzeichnet, dass** sich zwischen der leitfähigen Verbindung (3) und dem Isolator (5) ein Stecker (8) befindet.

7. Vorrichtung nach Anspruch 6, **dadurch gekennzeichnet, dass** der Stecker (8) eine handelsübliche R7S Verbindung ist.

8. Vorrichtung nach Anspruch 6, **dadurch gekennzeichnet, dass** der Stecker (8) ein handelsüblicher Flachstecker ist.

9. Vorrichtung nach wenigstens einem der vorhergehenden Ansprüche, **dadurch gekennzeichnet, dass** der Isolator (5) eine Aussparung aufweist, die im Wesentlichen den Abmaßen der leitfähigen Verbindung (3) und/oder des Steckers (8) entspricht.

10. Vorrichtung nach wenigstens einem der vorhergehenden Ansprüche, **dadurch gekennzeichnet, dass** zwischen 3 und 12 Strahler (2) und bevorzugt 9 Strahler (2) vorhanden sind.

11. Vorrichtung nach wenigstens einem der vorhergehenden Ansprüche, **dadurch gekennzeichnet, dass** die Strahler (2) mindestens in zwei Richtungen (11,12) verstellbar sind,

12. Vorrichtung nach wenigstens einem der vorhergehenden Ansprüche, **dadurch gekennzeichnet, dass** die Isolatoren (5) als quaderförmige Keramiksockel ausgebildet sind.

13. Vorrichtung nach wenigstens einem der vorhergehenden Ansprüche, **dadurch gekennzeichnet, dass** die elektrischen Anschlüsse (6) der Isolatoren (5) direkt mit der den Strom zuführenden Leitung verbunden sind.

14. Vorrichtung nach einem der Ansprüche 1 bis 13, **dadurch gekennzeichnet, dass** der Isolator (5) bereichsweise leitend ausgebildet ist, sodass eine elektrische Verbindung von den elektrischen Anschlüssen (3) über den Isolator (5) zum Strahler (2) hergestellt werden kann.

## Claims

1. Device for tempering preforms of PET with a heater box (17) comprising at least two radiators (2), wherein each radiator (2) consists at least of an elongated housing (4) and of conductive connections (3) mounted at the ends, wherein the conductive connections (3) are operatively connected to insulators (5) provided with electrical terminals (6), **characterized in that** the heater box (17) comprises a base plate (18) and two support plates (19) arranged substantially perpendicular to the base plate, wherein the radiators (2) are mounted on the base plate and the support plates, and the conductive connections (3) and the insulators (5) are operatively interconnected in a detachable manner by way of a plug connection.

2. Device according to claim 1, **characterized in that** the radiator (2) is an infrared radiator.

3. Device according to claim 2, **characterized in that** the radiator (2) comprises a spiral-wound filament in a quartz glass tube.

4. Device according to at least one of the preceding claims, **characterized in that** the two ends of the radiator (2) are flattened.

5. Device according to claim 4, **characterized in that** the two flattened ends of the radiator (2) are surrounded by metal sleeves (7) which are in electrical operative connection with the spiral-wound filament.

6. Device according to at least one of the preceding claims, **characterized in that** a plug (8) is positioned between the conductive connection (3) and the insulator (5).

7. Device according to claim 6, **characterized in that** the plug (8) is a commercially available R7S connection.

8. Device according to claim 6, **characterized in that** the plug (8) is a commercially available flat plug.

9. Device according to at least one of the preceding claims, **characterized in that** the insulator (5) comprises a recess which substantially conforms to the dimensions of the conductive connection (3) and/or of the plug (8).

10. Device according to at least one of the preceding claims, **characterized in that** there are between 3 and 12 radiators (2) and preferably 9 radiators (2).

11. Device according to at least one of the preceding claims, **characterized in that** the radiators (2) are adjustable at least in two directions (11, 12).

12. Device according to at least one of the preceding claims, **characterized in that** the insulators (5) are formed as cuboid ceramic bases.

13. Device according to any one of the preceding claims, **characterized in that** the electrical terminals (6) of the insulators (5) are directly connected to the power-supplying line.

14. Device according to any one of claims 1 to 13, **characterized in that** the insulator (5) is configured to be conductive in portions, so that an electrical connection can be established from the electrical terminals (3) via the insulator (5) to the radiator (2).

## Revendications

1. Dispositif pour tempérer, à savoir mettre en température, des préformes en PET, comprenant un caisson chauffant (17) présentant au moins deux émetteurs de rayonnement (2), chaque émetteur de rayonnement (2) étant constitué au moins d'un boitier allongé (4) et de liaisons de connexion conductrices (3) agencées aux extrémités, les liaisons de connexion conductrices (3) étant reliées de manière opérationnelle à des isolateurs (5) munis de branchements électriques (6), **caractérisé en ce que** le caisson chauffant (17) comprend une plaque de base (18) et deux plaques de support (19) agencées sensiblement de manière perpendiculaire à la plaque de base, les émetteurs de rayonnement (2) étant placés sur la plaque de base et les plaques de support, et les liaisons de connexion conductrices (3) et les isolateurs (5) étant reliés les uns aux autres de manière opérationnelle et de façon amovible, par une liaison enfichable.

2. Dispositif selon la revendication 1, **caractérisé en ce que** l'émetteur de rayonnement (2) est un émetteur infrarouge.

3. Dispositif selon la revendication 2, **caractérisé en ce que** l'émetteur de rayonnement (2) comporte un filament spiralé dans un tube de verre de quartz.

4. Dispositif selon l'une au moins des revendications précédentes, **caractérisé en ce que** les deux extrémités de l'émetteur de rayonnement (2) sont aplaties.

5. Dispositif selon la revendication 4, **caractérisé en ce que** les deux extrémités aplaties de l'émetteur de rayonnement (2) sont entourées d'enveloppes métalliques (7), qui sont en liaison électrique opérationnelle avec le filament spiralé.

6. Dispositif selon l'une au moins des revendications précédentes, **caractérisé en ce qu'**entre la liaison de connexion conductrice (3) et l'isolateur (5) se trouve un connecteur enfichable (8).

7. Dispositif selon la revendication 6, **caractérisé en ce que** le connecteur enfichable (8) est une liaison de connexion du type R7S usuelle du marché.

8. Dispositif selon la revendication 6, **caractérisé en ce que** le connecteur enfichable (8) est un connecteur à fiche plate usuel du marché.

9. Dispositif selon l'une au moins des revendications précédentes, **caractérisé en ce que** l'isolateur (5) présente un évidement qui correspond sensiblement aux dimensions de la liaison de connexion conductrice (3) et/ou du connecteur enfichable (8).

10. Dispositif selon l'une au moins des revendications précédentes, **caractérisé en ce que** sont prévus entre 3 et 12 émetteurs de rayonnement (2), et de préférence 9 émetteurs de rayonnement (2).

11. Dispositif selon l'une au moins des revendications précédentes, **caractérisé en ce que** les émetteurs de rayonnement (2) sont réglables dans au moins deux directions (11, 12).

12. Dispositif selon l'une au moins des revendications précédentes, **caractérisé en ce que** les isolateurs (5) sont réalisés sous la forme de socles de céramique de forme parallélépipédique.

13. Dispositif selon l'une au moins des revendications précédentes, **caractérisé en ce que** les branchements électriques (6) des isolateurs (5) sont reliés directement au conducteur assurant l'alimentation en courant.

14. Dispositif selon l'une des revendications 1 à 13, **caractérisé en ce que** l'isolateur (5) est conçu de manière à être conducteur par endroit, de sorte qu'une liaison électrique des connexions électriques (3) à l'émetteur de rayonnement (2) peut être établie par l'intermédiaire de l'isolateur (5).
